Europäisches Patentamt

European Patent Office

Office européen des brevets

(19)

(11) EP 1 336 431 A2

(12) **EUROPEAN PATENT APPLICATION**

(43) Date of publication:
20.08.2003 Bulletin 2003/34

(51) Int Cl.⁷: **B01J 19/00**

(21) Application number: 03250834.3

(22) Date of filing: 11.02.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **15.02.2002 GB 0203661**

(71) Applicant: **Syrris Limited**
**Royston, Herts SG8 5HW (GB)**

(72) Inventors:
• **Gilligan, Mark Peter Timothy**
**Benington, Hertfordshire SG2 7BS (GB)**
• **Homewood, Philip James**
**Cambridge CB4 3HG (GB)**
• **Whiffin, Rowland**
**Hitchin, Hertfordshire SG4 9ST (GB)**

(74) Representative: **Draper, Martyn John et al**
**Boult Wade Tennant**
**Verulam Gardens**
**70 Gray's Inn Road**
**London WC1X 8BT (GB)**

(54) **A microreactor**

(57) A microreactor with a sensor 9, 11 in a reaction channel 6. The sensor comprises a pair of spaced apart electrodes through which an AC voltage is passed. The amplitude and phase of the current flowing between the electrodes is monitored allowing the impedance of the reaction fluid between the electrodes to be measured.

FIG. 4.

EP 1 336 431 A2

**Description**

The present invention relates to a microreactor.

Miniaturisation of laboratory processes is considered to be of key importance in the future of biological and chemistry science. Chemical and biological reactions happen faster at microscale as a result of low diffusion distances and efficient heat transfer. Less material is used in reactions resulting in cheaper and more environmentally friendly operation. Microfluidic devices have other potential benefits above conventional systems including, simple integration of devices, access to information about reaction kinetics and easy scale up.

Microfluidic systems are currently available for a number of applications in the biology field, for example DNA sequencing on a chip. Such systems are designed to carry out one or a series of biochemical reactions that are understood well and have know outcomes.

Commercially available microfluidic products for the chemistry lab are however limited. This invention is about performing chemical reactions on a microscale, where little is known about the reaction mechanism or products of the reaction. This is typically the scenario in a chemistry lab where a diverse range of chemical reactions are carried out to make a wide variety of products. When a new reaction is carried out at microscale, the result may be variable in yield or purity.

One such microfluidic device is a microreactor which is a device used for carrying out chemical reactions. In a typical microreactor chemical reagents flow along microchannels and react when combined at flow junctions. Microchannel dimensions typically have a maximum internal dimension of 5-500µm. This results in flow with low Reynolds numbers ($<10^3$) and a predominantly laminar flow regime. In a laminar flow regime diffusional mixing defines the rate of chemical reactions. The rate of diffusion between two chemical reagents in a microreactor is defined by Fick's law.

The following reaction will be used to discuss the invention:

$$A + B \rightarrow C$$

A, B and C are typically in a solution. In practice A, B or C may represent more than one chemical and the reaction may be reversible and may require a catalyst. In the microreactor, A and B flow through a reaction channel where they combine via diffusion and react to form C.

To optimise the reaction between A and B it is necessary to measure a characteristic of the reaction fluid. In the past absorption of infrared light has been used but this is an expensive approach and is difficult to scale down to a microchannel.

According to the present invention there is provided a microreactor comprising a reaction channel; means to supply first and second reaction fluids to flow through the channel; and a sensor to monitor a characteristic of the reaction fluid produced when the first and second fluids react, the sensor comprising a pair of electrodes mounted in spaced apart relationship adjacent to the reaction channel, a voltage source to generate an alternating (AC) voltage across the electrodes, and an electrical circuit to measure the amplitude and phase of current flowing between the electrodes allowing the impedance of the reaction fluid between the electrodes to be measured.

This provides a simple way of detecting a characteristic of the reaction fluid which can be easily scaled down to a microchannel.

The electrodes may be made of a suitable material, provided that it is adequately shielded from the fluids. However, preferably, the electrodes are made from a chemically resistant material (for example a metal such as platinum or gold, or a non-metallic material such as glassy carbon). Such electrodes can therefore be in direct contact with the reaction fluids.

The electrodes may either be spaced across the channel to allow impedance of the fluid across the channel to be measured, or may be spaced along the channel to allow impedance of fluid close to the channel wall to be measured.

To gain as much information about the fluid as possible, the voltage source is preferably arranged to generate a voltage of variable frequency. This generates an impedance spectrum of the fluid passing between the electrodes. This gives information about the DC resistance and capacitance of the system. It is also possible that charged species in the reaction fluid will display different characteristics at different frequencies allowing further information on the reaction to be gathered.

The term "microreactor" and associated term "microchannel" are believed to be terms which are clearly understood in the art. The terms are best understood functionally as relating to reactors/channels which are sufficiently small that diffusional mixing predominates and efficient heat transfer occurs, resulting in optimal reaction conditions in the microchannel.

The dimensions should be sufficiently small that the flow results in a low Reynolds number ($<10^3$) and a predominantly laminar flow regime.

Generally, at its narrowest point, the reactor/channel should have, in cross-section, a maximum internal dimension of 5-500µm, and preferably 5-250µm. However, it is possible to envisage a channel which has a long thin cross-section having a dimension greater than 500µm, but which still operates as a microreactor as it is small in other dimensions. Therefore, it might be more appropriate to define a microreactor/microchannel as having, at its narrowest part, a cross-section in a plane perpendicular to the flow direction which is sized so that the largest circle which can be drawn in the cross-section has a diameter of less than 500µm (and preferably less than 250µm). In other words, if the cross-section is such that a circle of greater than 500μm can be drawn within the cross-section, it will not operate as a microchannel.

An example of a microreactor in accordance with the present invention will now be described with reference to the accompany drawings, in which:

Fig. 1 is a schematic diagram showing the general principle of the microreactor;

Fig. 2 is a schematic diagram showing a first configuration of sensors;

Fig. 3 is a schematic diagram showing a second configuration of sensors;

Fig. 4 is a schematic diagram showing the positioning of the sensors on the reaction channel;

Fig. 5 is a cross-section through a glass chip showing the reaction channel;

Fig. 6 is a cross-section similar to Fig. 5 showing the provision of an electrode within the chip;

Fig. 7 is a view similar to Figs. 5 and 6, showing an alternative way of creating an electrode to that shown in Fig. 6; and

Fig. 8 is a schematic diagram showing a third configuration of sensors.

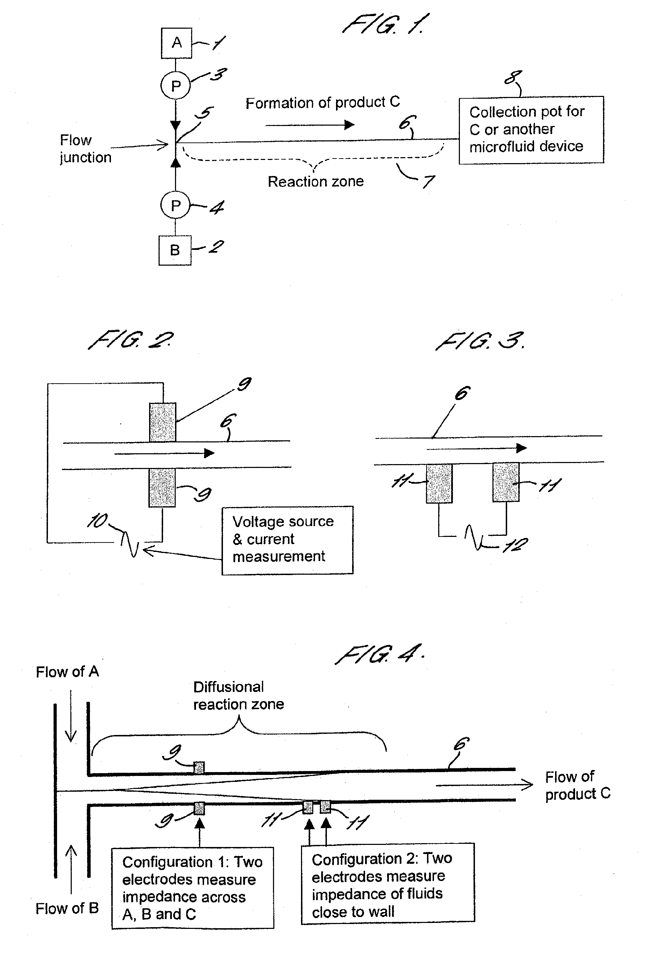

Fig. 1 shows a typical layout of a micro reactor. The microreactor comprises a first reservoir 1 containing chemical reagent A and a second reservoir 2 containing chemical reagent B. Chemical reagents A and B are pumped by respective first 3 and second 4 pumps to a flow junction 5 where they meet and mix. They then flow along a reaction microchannel 6 which provides a reaction zone 7 in which A and B combine via diffusion. The reactions product C is collected in a collection pot 8, or is sent to a further microfluidic device.

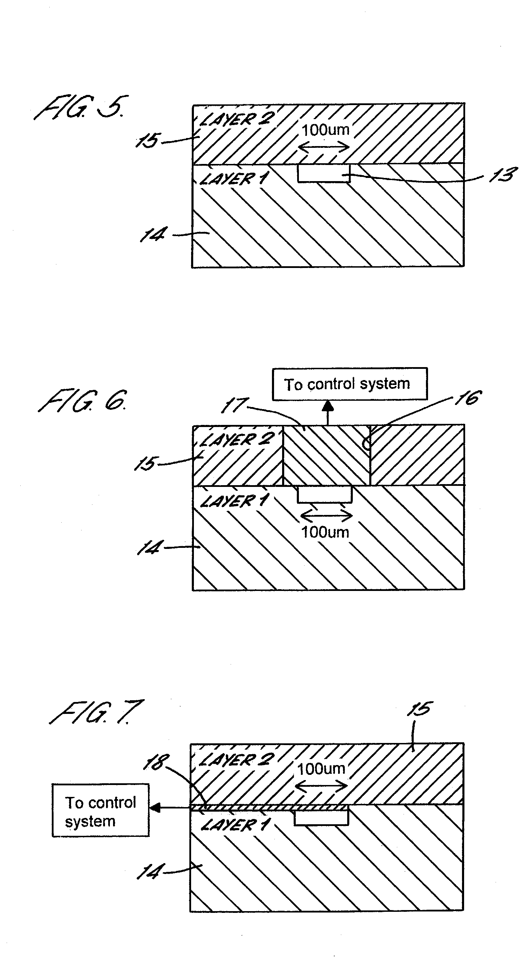

A first configuration of sensors is shown in Fig. 2. In this arrangement, a pair of electrodes 9 are positioned opposite one another across the reaction channel 6. The voltage of variable frequency is supplied from the voltage source 10 and the current flowing around the circuit is measured.

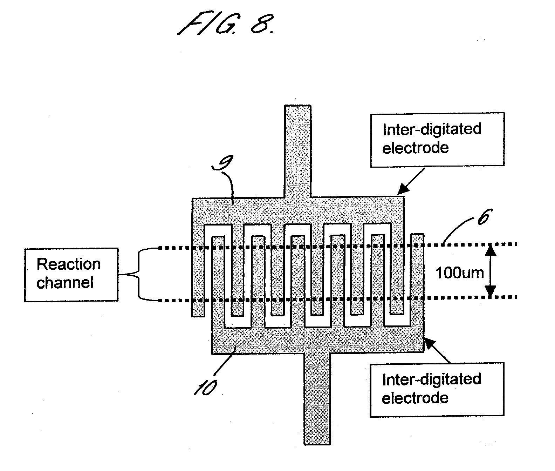

A second configuration is shown in Fig. 3. In this case, both electrodes 11 are on the same side of the channel to measure the impedance along the channel, while voltage source 12 applies a voltage across the electrodes 11 and the current flowing around the circuit is detected.

More than one pair of electrodes may be used in practice. Further, similar electrodes may be provided in the feed channels upstream of the reaction channel 6.

Fig. 4 shows the progression of the reaction in greater detail.

The two chemical reagents A, B initially flow along-side each other in the reaction channel 6 in a laminar flow regime as shown in Fig. 4 at the left end of the reaction channel 6. The reagents gradually mix by diffusion and react with each other forming product C. The rate of diffusion is determined by Fick's law, this in turn determines the reaction rate.

Electrodes 9 makes an averaged measurement of the reaction fluid impedance. This gives some information about the relative concentrations of A, B and C. Electrodes 12 can be used to measure the impedance of the fluid near the reaction channel wall. This will give some information about whether product C has formed across the width of the channel or not.

The reaction monitoring systems described may be implemented in a number of different ways. One possible method would be in a layered glass construction referred to as a chip. Chips are also constructed from a variety of plastics for use in Chemistry and Biology research fields.

The cross-section of a suitable glass chip is shown in Fig. 5.

Microchannels 13 (one of which is shown in Fig. 5) are formed in the top surface of a lower layer 14 of the chip by a process involving photolithography and wet chemical etching. A top layer is then placed on top of the lower layer and the surfaces of the layers are fused at elevated temperatures. Holes may be drilled into the top layer creating reservoirs for holding chemical reagents.

Electrodes can be included in this construction in two ways.

As shown in Fig. 6, a round drilled hole 16 may be drilled in the top layer 15 and a cylindrical metal electrode 17 is fused in place at an elevated temperature with small glass beads acting as an adhesive between the glass and metal surface.

Alternatively, as shown in Fig. 7, a metal electrode 18 could be plated or sputtered onto the surface of one of the layers (in this case the lower layer 14) before the two layers are fused. A pattern of plated electrodes could be achieved on the surface of one of the layers using a mask and electro-plating or sputtering method. The thickness of the plated electrodes would be in the range of 10-200nm to avoid affecting the fusing process between the glass layers. The glass surface may also be etched down 10-200nm prior to the plating or sputtering process so that the electrode does not stand proud of the glass. This helps in the fusing process that follows.

Examples of the use of microreactors in industry pilot plant include:

· Production of acrylates such as poly(methyl-methacrylate) (PMMA) by a radical polymerisation reaction.

· Fine chemical synthesis involving a ketone reduction reaction using Grignard reagent.

Microreactors also have many potential uses in the laboratory, for example in the synthesis of compounds in pharmaceutical and agrochemical research labs. One reaction that has been carried out successfully in a laboratory microreactor is the Wittig reaction.

This reaction is essentially an A + B → C reaction where two of the starting compounds may be combined (without reacting) in one reservoir to form A, the other starting compound forms B and the three compounds synthesised form product C. The reaction is typically carried out in solution (e.g. in methanol).

The Wittig reaction results in the formation of a carbon - carbon bond and is used in the synthesis of organic molecules. In pharmaceutical research labs this reaction is frequently used in the synthesis of potential drug candidates. The Wittig reaction is also used in industry for a variety of syntheses, for example in the synthesis of vitamin A.

The Wittig reaction may be monitored in a microreactor as described by measuring the impedance of the reaction fluid. The impedance of a fluid is related to the amount of charge on the fluid particles and the mobility of these particles. During a reaction charge is redistributed between molecules and molecules with different mobility are formed. In the Wittig reaction a bromide ion is formed. The ion is charged and very mobile so the conductivity of the fluid is likely to increase as a result. This in turn affects the fluid impedance. During the reaction the polarity of molecules formed is different to the polarity of the starting molecules. This results in a change of fluid capacitance during the reaction, hence a change in the fluid impedance. By monitoring the changes in impedance of the reaction fluid the Wittig reaction may be optimised. For instance, adjusting the reaction conditions to give the largest impedance charge would result in optimal yield.

A third configuration of sensors is shown in Fig. 8. In this arrangement, the pair of electrodes 9,10 have a branched configuration and are arranged to extend from opposite sides of the reaction channel 6 as shown in an interdigitated configuration. This type of configuration can be sputtered onto one glass surface as described previously. Such an arrangement improves the sensitivity of the sensing in that it increases the conductance of the electrodes allowing the microreactor to be used with chemicals having poor electrical conductivity.

**Claims**

1. A microreactor comprising a reaction channel; means to supply first and second reaction fluids to flow through the channel; and a sensor to monitor a characteristic of the reaction fluid produced when the first and second fluids react, the sensor comprising a pair of electrodes mounted in spaced apart relationship adjacent to the reaction channel, a voltage source to generate an alternating (AC) voltage across the electrodes, and an electrical circuit to measure the amplitude and phase of current flowing between the electrodes allowing the impedance of the reaction fluid between the electrodes to be measured.

2. A microreactor according to claim 1, wherein the electrodes are in direct contact with the reaction fluids and are made from a chemically resistant material.

3. A microreactor according to claim 1 or claim 2, wherein the electrodes are spaced across the channel to allow impedance of the fluid across the channel to be measured.

4. A microreactor according to claim 1 or claim 2, wherein the electrodes are spaced along the channel to allow the impedance of the fluid close to the channel wall to be measured.

5. A microreactor according to any one of the preceding claims, wherein the voltage source is arranged to generate a voltage of variable frequency, and the impedance of the fluid measured across a frequency spectrum.

FIG. 1.

A — 1

P — 3

Formation of product C
→

Flow junction

Reaction zone — 7

Collection pot for C or another microfluid device — 8

P — 4

B — 2

5

6

FIG. 2.

9

6

9

10

Voltage source & current measurement

FIG. 3.

6

11 — — 11

12

FIG. 4.

Flow of A

Diffusional reaction zone

9

6

Flow of product C

9

11 — 11

Configuration 1: Two electrodes measure impedance across A, B and C

Configuration 2: Two electrodes measure impedance of fluids close to wall

Flow of B

FIG. 5.

LAYER 2

15

100um

LAYER 1

13

14

FIG. 6.

To control system

17

16

LAYER 2

15

LAYER 1

100um

14

FIG. 7.

15

LAYER 2

18

100um

To control system

LAYER 1

14

FIG. 8.

Inter-digitated electrode

Reaction channel

100um

Inter-digitated electrode